(19) Europäisches Patentamt

European Patent Office

Office européen des brevets

(11) EP 0 628 792 B1

(12) **FASCICULE DE BREVET EUROPEEN**

(45) Date de publication et mention
de la délivrance du brevet:
**13.05.1998 Bulletin 1998/20**

(51) Int Cl.$^6$: **G01F 1/32**

(21) Numéro de dépôt: **94201612.2**

(22) Date de dépôt: **07.06.1994**

(54) **Système de mesure de signaux d'un oscillateur fluidique**

Signalerfassung eines fluidischen Oszillators

Signal sensing of a fluidic oscillator

(84) Etats contractants désignés:
**BE DE FR GB IT NL**

(30) Priorité: **11.06.1993 FR 9307042**

(43) Date de publication de la demande:
**14.12.1994 Bulletin 1994/50**

(73) Titulaire: **SCHLUMBERGER INDUSTRIES
F-92120 Montrouge (FR)**

(72) Inventeur: **Bazin, Alain
F-94800 Villejuif (FR)**

(56) Documents cités:
**DE-A- 2 610 336          FR-A- 2 449 870
US-A- 4 966 040**

**Description**

La présente invention concerne un système pour mesurer la fréquence d'oscillation d'un fluide à l'intérieur d'un oscillateur fluidique comprenant des moyens de détection des oscillations du fluide fournissant un signal représentatif de ces oscillations. L'invention se rapporte aussi à un débitmètre comprenant un oscillateur fluidique et un tel système.

Les débitmètres les plus communs pour un fluide, tel qu'un gaz ou un liquide, comportent des éléments mécaniques en mouvement, tels que des débitmètres à turbine ou membrane. Cependant, il existe aussi des débitmètres utilisant des oscillateurs fluidiques qui n'ont pas de pièces en mouvement mais qui mesurent les vibrations d'un fluide à l'intérieur d'une chambre d'oscillation. Ces oscillateurs peuvent être de petite dimension et d'architecture très simple. Leur fiabilité est donc très bonne. De plus ils délivrent un signal en fréquence, dont la fréquence est proportionnelle à la vitesse du fluide entrant dans la chambre d'oscillation. Ce signal peut être aisément converti en signal numérique. Cette caractéristique est particulièrement avantageuse pour la lecture des compteurs à distance.

Il existe de nombreuses réalisations d'oscillateurs fluidiques qui produisent des vibrations dans un fluide par des effets différents. Des oscillateurs à tourbillons utilisent un obstacle mis en place dans une conduite pour engendrer des tourbillons dans un fluide s'écoulant dans la conduite. Pour un obstacle de géométrie donnée, la fréquence de détachement des tourbillons est proportionnelle à la vitesse d'écoulement du fluide. Un oscillateur de ce genre est décrit dans le brevet US 4 085 615. Des oscillateurs à effet Coanda utilisent la tendance d'un jet fluide à suivre les contours d'une paroi quand le jet se décharge près de cette paroi, même si le contour de cette paroi s'éloigne de l'axe de décharge du jet. Un oscillateur fluidique de ce type est décrit dans le brevet US 4 550 614 où un jet de fluide se décharge dans une chambre ayant deux parois latérales placées symétriquement dans la chambre par rapport à l'axe de décharge du jet, ledit jet oscillant d'une paroi à l'autre. Il existe également d'autres genres d'oscillateurs fluidiques qui utilisent l'oscillation naturelle d'un jet de fluide provenant d'une buse ou qui utilisent d'autres moyens pour provoquer l'oscillation d'un jet ou pour engendrer des tourbillons. Le terme "oscillateurs fluidiques" est appliqué dans ce texte à tous les oscillateurs qui produisent des vibrations du fluide lesquelles sont représentatives de la vitesse du fluide.

Des moyens de détection, tels que par exemple une paire de capteurs de pression ou capteurs thermiques situés à des emplacements différents dans la chambre d'oscillation, détectent les oscillations du fluide dans la chambre. Les moyens de détection délivrent un signal alternatif ayant une fréquence proportionnelle à la vitesse du fluide qui entre dans la chambre d'oscillation. Pour être idéale, l'amplitude moyenne de ce signal alternatif devrait rester constante. Malheureusement, des asymétries dans le système, par exemple à cause de l'emplacement des capteurs, ont pour effet que l'amplitude moyenne du signal peut changer, parfois de façon très importante, avec des changements dans la fréquence du signal. Ce problème se présente en particulier avec des oscillateurs à tourbillons et des débitmètres utilisés dans le domaine du comptage industriel, par exemple dans un compteur à gaz industriel, où les quantités et la vitesse du fluide sont plus grandes que celles utilisées dans le domaine du comptage domestique ou commercial. Cette forte modulation du signal présente des inconvénients en ce qui concerne la mesure de la fréquence et le traitement du signal pour obtenir la vitesse d'écoulement du fluide. Les techniques conventionnelles pour compenser les déplacements du zéro du signal, par exemple par l'utilisation d'un circuit intégrateur, sont en général efficaces pour les variations d'amplitude lentes, mais elles ne sont pas efficaces pour des variations rapides. En outre, dans le domaine du comptage des fluides où une pile électrique est utilisée dans le circuit de traitement du signal, il faut que la consommation du courant soit minimisée pour prolonger la durée de vie de la pile. Des circuits conventionnels pour le traitement et la conversion du signal ayant de grandes modulations d'amplitude sont relativement compliqués et consomment beaucoup de courant. Le signal délivré par les moyens de détection peut parfois présenter une faible amplitude et il n'est pas aisé d'exploiter un tel signal en utilisant une pile et en consommant peu d'énergie.

On connaît, d'après le brevet US 3982434, un circuit qui permet de réduire les composantes à basses fréquences des signaux d'écoulement détectés par un capteur thermique dans un compteur de fluide à tourbillons et d'extraire les composants à hautes fréquences de ces signaux. Ce circuit comprend un amplificateur inverseur, un détecteur de crête, un amplificateur sommateur et un amplificateur à déclenchement. Le détecteur de crête détecte des crêtes positives et négatives des signaux d'écoulement détectés par le capteur thermique et délivre un signal dont la fréquence correspond au débit de l'écoulement du fluide.
Néanmoins, ce circuit fonctionne avec des tensions d'alimentations relativement élevées de 12 et 24 V et n'est donc pas adapté au fonctionnement sur pile, ni d'ailleurs à une faible consommation énergétique. En outre, le circuit décrit dans le brevet US 3982434 présente une certaine complexité.

Le but de la présente invention est de fournir un système simple qui consomme peu de courant et qui est apte à délivrer un signal numérique représentatif de la fréquence d'oscillation du fluide même en présence de variations importantes du signal et qui permet notamment de traiter aussi bien les signaux de faible amplitude que ceux de forte amplitude.
La présente invention a pour objet un système pour mesurer la fréquence d'oscillation d'un fluide à l'intérieur d'un oscillateur fluidique comprenant des moyens de détection des oscillations du fluide fournissant un signal représentatif de ces oscillations, les moyens de détection ayant un détecteur de crête comprenant un dispositif à seuil recevant un premier signal correspondant au signal représentatif des oscillations, le dispositif à seuil étant dans un état conducteur lorsque la tension qui lui est appliquée dépasse une valeur de seuil, le dispositif délivrant alors un deuxième signal ayant une chute de tension par rapport au premier signal, des moyens pour recevoir et mémoriser le deuxième signal, et des moyens de comparaison comparant la valeur du deuxième signal mémorisé avec la valeur du premier signal et délivrant un signal de sortie caractéristique des valeurs relatives des premier et deuxième signaux, caractérisé en ce que le détecteur de crête comprend en outre un amplificateur qui reçoit et amplifie le signal délivré par les moyens de détection et qui fournit le premier signal au dispositif à seuil, le gain de l'amplificateur étant contrôlé par le deuxième signal reçu du dispositif à seuil.

Le dispositif à seuil et les moyens pour mémoriser fonctionnent comme une mémoire tampon. Pendant que l'amplitude du premier signal augmente, la valeur du signal mémorisé dans la mémoire restera en arrière du premier signal par la valeur de la chute de tension du dispositif à seuil et les moyens de comparaison délivrent une première sortie montrant que l'amplitude du premier signal est supérieure à l'amplitude du signal mémorisé. Lorsqu'une crête est atteinte et que l'amplitude du signal diminue, la différence entre la valeur du signal mémorisée et l'amplitude du signal lui-même chutera en dessous du seuil du dispositif à seuil et ce dernier ne sera plus dans un état passant. La valeur du signal mémorisé est alors fixée, et lorsque le signal diminue en dessous du niveau de la valeur du signal mémorisé, les moyens de comparaison délivreront un signal de sortie différent, montrant que l'amplitude du signal mémorisé est maintenant supérieure à l'amplitude du premier signal et qu'une crête s'est présentée.

Le gain de l'amplificateur est contrôlé par le deuxième signal reçu du dispositif à seuil signifie que lorsque l'amplitude du premier signal délivré par les moyens de détection est égale ou plus faible que le niveau du seuil dudit dispositif à seuil, celui-ci n'est pas dans un état conducteur, le deuxième signal a donc une valeur nulle et, par conséquent, ledit premier signal sera amplifié par le gain propre de l'amplificateur.

Par contre, lorsque l'amplificateur du premier signal augmente et est supérieure au niveau du seuil du dispositif à seuil, ce signal n'aura pas besoin d'être amplifié car ledit dispositif à seuil est dans un état conducteur et délivre un deuxième signal dont l'amplitude augmente avec celle du premier signal. Dans un tel cas, le gain de l'amplificateur est égal à l'unité.

La combinaison des éléments de l'invention fournit un détecteur de crête avec une réponse rapide qui suit l'amplitude du signal des moyens de détection lors de ses variations, qui délivre une sortie lorsqu'une crête est atteinte malgré de grandes modulations du signal d'oscillation et qui permet de s'adapter aux signaux de faible amplitude. En effet, grâce à l'invention, on dispose d'un montage limiteur de gain dont le gain dépend de l'amplitude du signal délivré par les moyens de détection, ce qui signifie que ce montage n'amplifie que les signaux de faible amplitude en consommant peu d'énergie par comparaison avec le circuit décrit dans le brevet US 3982434 qui amplifie tous les signaux en consommant davantage d'énergie. En outre, le dispositif à seuil, les moyens de comparaison, les moyens pour mémoriser et l'amplificateur peuvent être aisément réalisés par des composants peu coûteux dans un circuit qui consomme peu de courant.

De préférence, le dispositif à seuil est en état conducteur lorsque la tension qui lui est appliquée dépasse un seuil négatif ou un seuil positif, c'est-à-dire, que le dispositif est dans un état conducteur dans un sens comme dans l'autre.

Dans cette réalisation, le détecteur fonctionne également pour délivrer un signal de sortie pour des crêtes positives et des crêtes négatives. Selon un mode de réalisation, le dispositif à seuil comprend deux diodes montées tête-bêche. Les moyens pour mémoriser peuvent également comprendre un condensateur. L'amplificateur est un amplificateur différentiel, l'une des deux entrées de l'amplificateur recevant le signal délivré par les moyens de détection et l'autre entrée recevant un signal dépendant du deuxième signal mémorisé et de la sortie de l'amplificateur, la sortie de l'amplificateur fournissant le premier signal et étant relié au dispositif à seuil. Un adaptateur d'impédance de gain unitaire est disposé entre l'amplificateur et les moyens pour mémoriser le deuxième signal ce qui permet en quelque sorte d'isoler lesdits moyens de mémorisation de l'amplificateur et de restituer audit amplificateur l'amplitude du deuxième signal.

L'adaptateur d'impédance est par exemple un circuit suiveur.

Les moyens de comparaison peuvent également comprendre un amplificateur qui reçoit les premier et deuxième signaux à deux des ses entrées pour les comparer. Tous ces composants sont peu coûteux et fonctionnent ensemble avec une très faible consommation de courant.

Les caractéristiques de l'invention ressortiront mieux à la lecture de la description qui suit, donnée à titre illustratif et non limitatif, et en se référant aux dessins annexés sur lesquels:

La Figure 1 représente un système pour mesurer la fréquence d'oscillation d'un oscillateur fluidique, y compris un détecteur de crête, conforme à l'invention;

La Figure 2 représente un détecteur de crête qui est utilisé dans le système de la Figure 1 selon un premier mode de réalisation de l'invention;

La Figure 3 représente un détecteur de crête qui est utilisé dans le système de la Figure 1 selon un deuxième mode de réalisation de l'invention;

La Figure 4 montre un exemple représentatif des signaux à l'entrée et à la sortie des détecteurs de crête;

La Figure 5 montre l'opération effectuée par le détecteur de crête sur une crête;

La Figure 6 montre un oscillateur à tourbillons pour utilisation avec le système de la Figure 1.

La Figure 7 montre un exemple représentatif du comportement du système de la Figure 3 pour un exemple de signal d'entrée analogue à celui de la Figure 4.

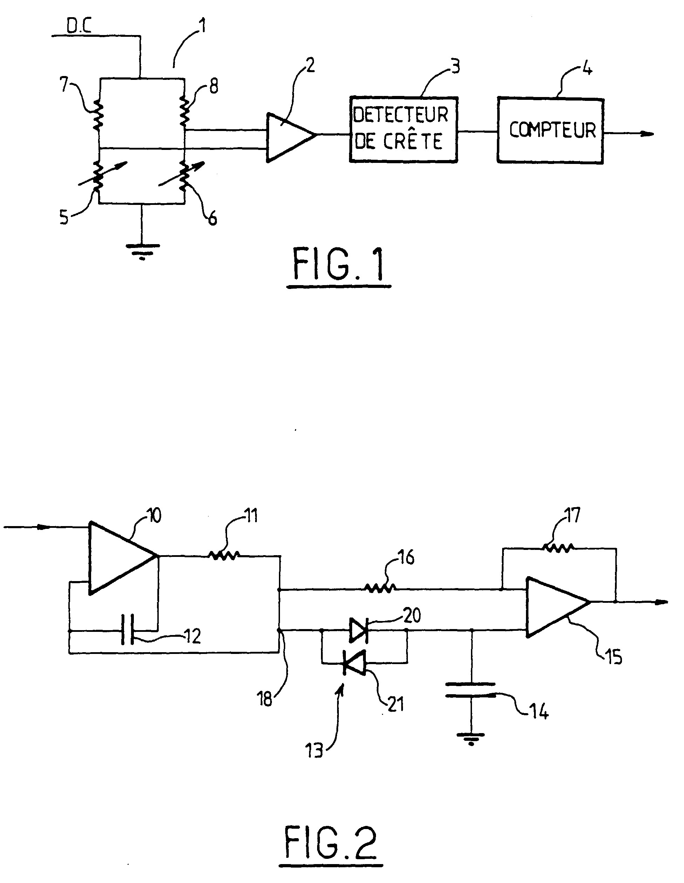

En se référant à la Figure 1, un système pour mesurer la fréquence d'oscillation du fluide à l'intérieur d'un oscillateur fluidique comprend des moyens de détection 1, un amplificateur 2, un détecteur de crête 3, et un compteur 4. Les moyens de détection sont conventionnels et comprennent deux thermistors 5, 6, et une source de courant continu et deux résistances 7, 8. Les thermistors 5, 6 sont placés avec une source de chaleur et détectent les changements de température à cause des oscillations du fluide de l'oscillateur fluidique.

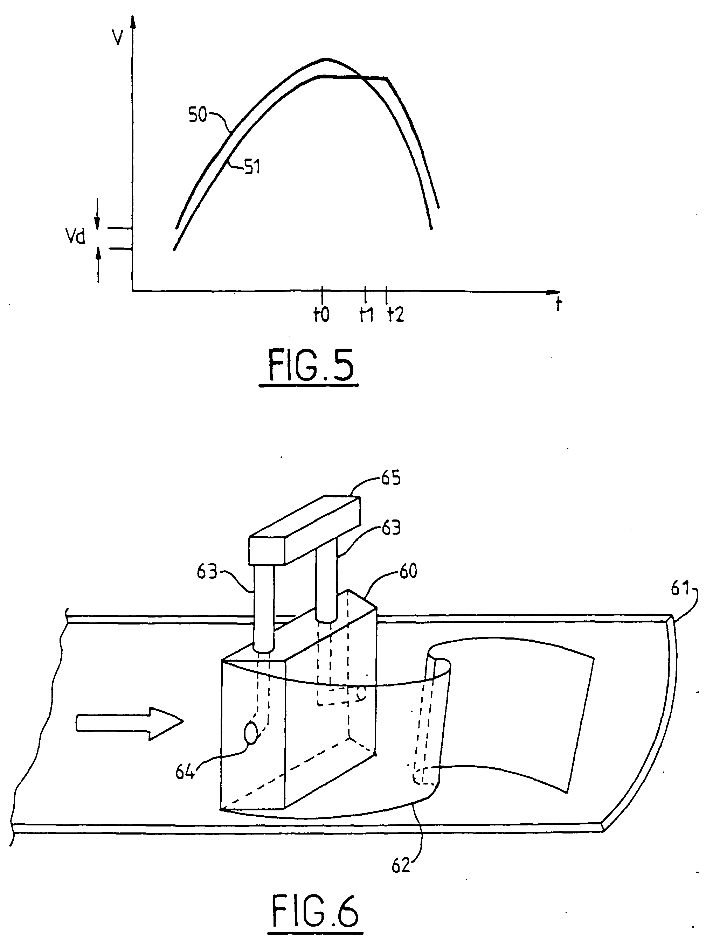

En se référant à la Figure 6, un oscillateur à tourbillons est représenté dans son utilisation avec le système de la figure 1 et comprend un obstacle 60 mis en place dans un tuyau 61. La direction de l'écoulement du fluide dans le tuyau 61 est indiquée par la flèche. L'écoulement du fluide contre l'obstacle 60 engendre les tourbillons 62 dans le fluide qui se forment alternativement sur chacun des côtés de l'obstacle, créant ainsi un phénomène d'oscillations périodiques. Une pression différentielle s'établit entre les deux côtés et oscille avec une fréquence proportionnelle à la vitesse d'écoulement du fluide. Un canal 63 relie des orifices 64 formés de chaque côté de l'obstacle et une partie du fluide coule dans le canal d'un orifice à l'autre, la direction d'écoulement du fluide dépendant de la pression différentielle. L'oscillateur à tourbillons est muni d'un détecteur 65 comprenant les thermistors et la source de chaleur des moyens de détection du système de la Figure 1. Les thermistors et la source de chaleur sont placés dans le canal 63, la source de chaleur étant mise en position entre les thermistors. Selon la direction d'écoulement du fluide, un thermistor sera en aval et l'autre sera en amont de la source de chaleur. Quand la direction d'écoulement change la situation est inversée.

Les changements dans les résistances des thermistors 5, 6 et dans les tensions aux bornes des thermistors en raison des variations de température des thermistors sont détectés par un amplificateur 2 qui délivre un signal alternatif à l'entrée du détecteur de crête.

Les moyens de détection décrits ci-dessus sont conventionnels et bien connus de l'homme de métier. Des détecteurs alternatifs, comme par exemple des capteurs utilisant l'effet piézoélectrique etc., peuvent être utilisés.

Le détecteur de crête 3 délivre un signal digital correspondant au nombre de crêtes détectées à l'entrée d'un compteur 4 qui fournit une sortie correspondant à la fréquence des oscillations et à la vitesse du fluide. Il serait à la portée d'un homme du métier de construire un débitmètre utilisant cette sortie.

Comme représenté à la Figure 2 un détecteur de crête selon une réalisation de l'invention comprend un amplificateur 10 avec une résistance 11 et un condensateur 12, un dispositif à seuil 13 comprenant deux diodes 20, 21 montées tête-bêche, un condensateur 14 jouant le rôle d'une mémoire, un amplificateur différentiel 15 et des résistances 16, 17. Chaque diode 20 ou 21 peut être la jonction d'un TEC.

L'amplificateur 10, la résistance 11 et le condensateur 12 isolent le signal à l'entrée du condensateur 14. Dans d'autres réalisations ils peuvent être omis. Chaque diode est caractérisée par un seuil et affiche une chute de tension lorsqu'elle est dans un état conducteur ou passant. Lorsque l'amplitude du signal au point 18 augmente au dessus du seuil de la diode 20 la diode sera dans un état conducteur et la valeur du signal de tension au point 18 diminuée de la chute de tension de la diode sera mémorisée dans le condensateur 14.

L'amplificateur différentiel 15 compare la valeur de la tension au point 18 avec la valeur de la tension du condensateur 14 et fournit un signal élévé tandis que la tension au point 18 est supérieure à la tension du condensateur 14.

Lorsqu'une crête est atteinte et que l'amplitude du signal diminue, la différence entre la valeur du signal au point 18 et la valeur du signal mémorisé par le condensateur 14 tombera au dessous du seuil de la diode 20 et la diode 20 deviendra non-conductrice. La valeur du signal retenue dans le condensateur 14 est alors fixée. Quand le signal au point 18 tombe au dessous de la valeur du signal du condensateur 14, l'amplificateur 15 fournira un signal bas montrant qu'une crête s'est présentée. Quand le signal chute au dessous de la valeur du signal mémorisé dans le condensateur 14 par une valeur correspondant au seuil de la diode 21, la diode 21 deviendra conductrice et la valeur du signal mémorisé dans le condensateur 14 chutera avec la valeur du signal au point 18 diminuée de la valeur de la chute de tension de la diode 21. Quand une crête négative est atteinte et passée, la diode 21 deviendra encore nonconductrice et l'amplificateur 15 indiquera un changement d'état quand le signal au point 18 augmentera au dessus de la valeur du signal mémorisé dans le condensateur 14.

La figure 5 montre la variation de la tension du premier signal au point 18 par la courbe 50 et la variation de la tension du condensateur par la courbe 51. Au début, la tension du condensateur 51 est égale à la tension du signal 50 diminuée de la valeur Vd correspondant à la chute de tension de la diode 20 et l'amplificateur 15 fournit un signal élevé. Quand une crête est atteinte au temps t0 et la tension du signal 50 diminue en dessous de la valeur de seuil de la diode 20, la tension du condensateur 51 est fixée. Au temps t1 la tension du signal 50 chute en dessous de la tension mémorisée dans le condensateur 51 et la sortie de l'amplificateur 15 fournit un signal bas. Au temps t2 la différence entre la tension du signal et la tension mémorisée dans le condensateur est plus grande que la valeur du seuil de la diode 21 et la tension du condensateur suit encore la tension du premier signal.

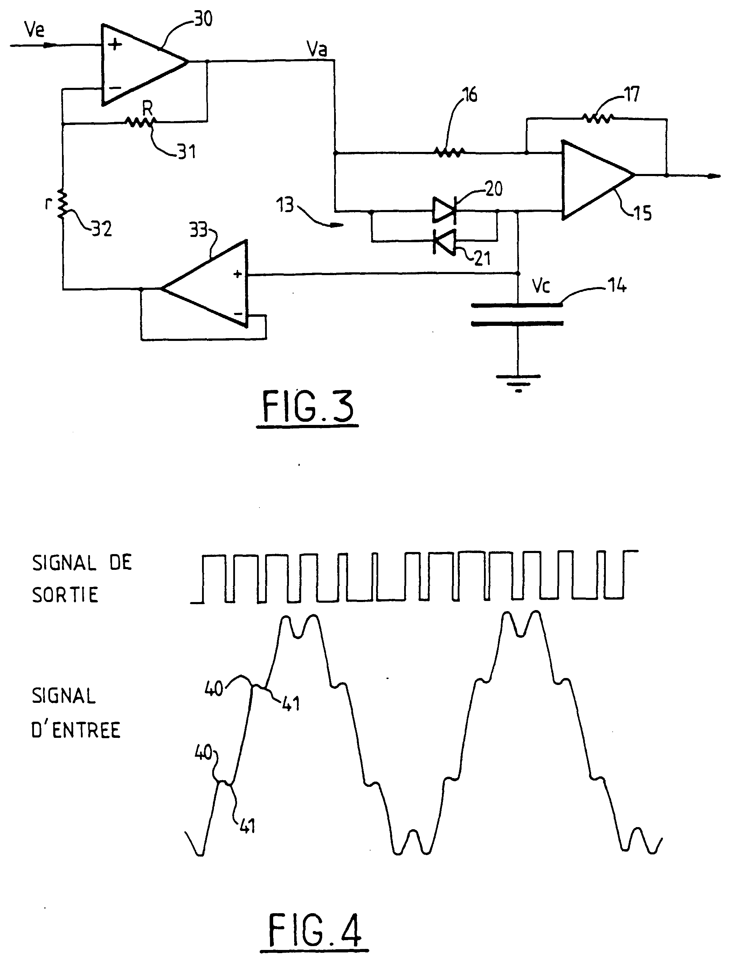

La Figure 4 montre le signal de sortie du circuit de la Figure 2 par comparaison avec un exemple de signal d'entrée. On peut considérer le signal d'entrée comme un signal sinusoïdal de fréquence élevée mais d'une amplitude faible superposée à un bruit de grande amplitude qui produit de grandes variations d'amplitude du signal. Malgré ces variations, le changement du sens du signal d'entrée à chaque crête positive 40 ou à chaque crête négative 41 est marqué par un changement du sens du signal de sortie. Le signal de sortie peut être utilisé immédiatement par le compteur 4 pour délivrer une valeur numérique correspondant à la fréquence d'oscillation et à la vitesse du fluide entrant dans la chambre d'oscillation.

La figure 3 représente un détecteur de crête selon un deuxième mode de réalisation de l'invention. Les éléments ayant la même fonction que les éléments de la figure 2 sont indiqués par les mêmes numéros de référence.

Cette réalisation est, en particulier, adaptée à la détection des signaux d'amplitude égale ou plus faible que le niveau du seuil du dispositif à seuil 13 et comprend également un amplificateur 30, ayant des résistances associées 31, 32 qui déterminent le gain propre de l'amplificateur 30, et un amplificateur 33 de gain égal à un qui délivre une sortie correspondante à la valeur de la tension du condensateur 14 et qui isole l'amplificateur 30 du condensateur 14. Le montage 33 est en réalité un circuit suiveur qui présente un impédance d'entrée infinie et une très faible impédance de sortie. Ainsi, le condensateur C ne se décharge pas et il n'est donc pas nécessaire d'utiliser un condensateur ayant une grande valeur de capacité. Pour un signal Ve de très faible amplitude à l'entrée, la sortie de l'amplificateur 30 sera en dessous du seuil Vd des diodes 20, 21 qui resteront dans un état non-passant. Par conséquent, la tension du condensateur 14 restera nulle et l'amplificateur fonctionnera avec un gain déterminé par la proportion des valeurs des résistances 31, 32. Lorsque l'amplitude du signal augmente, la sortie de l'amplificateur 30 passera le seuil de la diode 20 et la valeur de la tension du condensateur 14 augmentera aussi. La tension de sortie de l'amplificateur 33 suivra la tension du condensateur 14 et le gain de l'amplificateur 30 diminuera progressivement lorsque la différence entre Ve et la sortie de l'amplificateur 33 diminuera. A la limite, le gain de l'amplificateur devient égal à un et l'amplificateur 30 se comporte alors comme un suiveur. Cependant, des valeurs intermédiaires du signal Ve seront amplifiées et le dispositif à seuil et les moyens pour mémoriser détecteront les crêtes de ces signaux.

Pour le cas où Ve a une amplitude très faible :

$$Va < Vd \text{ et } Vc = 0$$

où Va est la tension de la sortie de l'amplificateur 30, Vd est la chute de tension et le seuil des diodes 20, 21 et Vc est la tension du condensateur 14. Le gain propre de l'amplificateur est :

$$\frac{Va}{Ve} = \frac{R}{r} + 1$$

Où R et r sont respectivement les résistances des éléments 31, 32. Pour un gain de valeur 10 et pour un seuil Vd égal à 0.7V, la limite la plus basse de Ve permettant au circuit de détecter des crêtes est 0.07V.

Dans l'autre cas où Va > Vd :

$$\frac{(Va - Vc)}{R} r + Vc = Ve$$

et aussi :

$$Vc = Va - Vd$$

Ainsi :

$$Va = Ve + \frac{Vd \times R}{R + r}$$

Pour le gain égal à 10 et R = 9r :

$$Va = Ve + 0.9 \, Vd$$

Pour Vd << Ve

$$Va = Ve$$

Ainsi, pour les signaux de forte amplitude le gain du circuit chute presque à l'unité, tandis que les signaux de faible amplitude sont amplifiés pour faciliter la détection des crêtes.

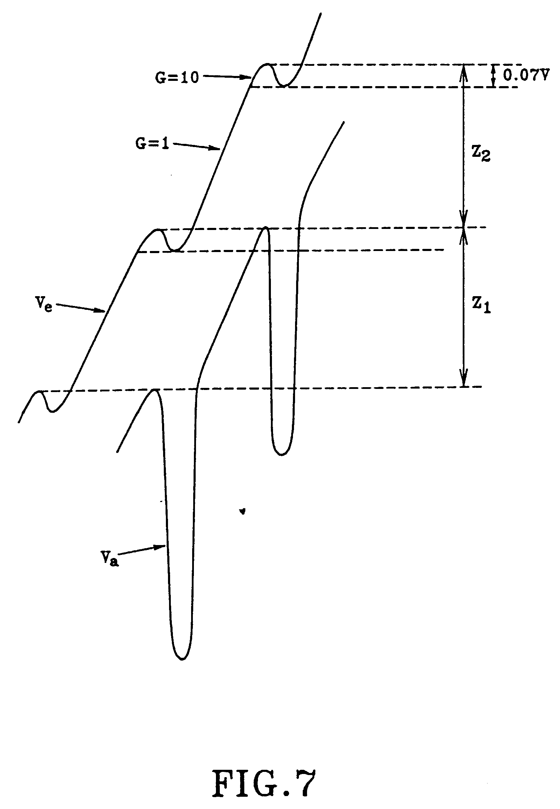

L'exemple de la figure 7 illustre le fonctionnement du système de mesure et représente un signal d'entrée Ve reçu par l'amplificateur 30 du type de celui représenté à la figure 4 ainsi que le premier signal Va délivré par ledit amplificateur 30 au dispositif à seuil 13.

Les zones Z1 et Z2 sont les zones où la tension Vc suit la tension Va et où le gain de l'amplificateur 30 est égal à l'unité.

Par contre, lorsque le signal se situe dans les zones de la courbe indiquées en pointillés, la tension Vc ne va plus varier étant donné l'inversion du sens de variation de Va et l'évolution dans les limites du seuil des diodes. Par conséquent, le gain de l'amplificateur 30 devient égal à $G = \frac{R}{r} + 1$ dans ces zones soit $G = 10$ compte tenu de l'exemple numérique précité.

Ainsi, pour des inversions de faible amplitude sur le signal d'entrée, par exemple, de l'ordre de 0,07V, le montage limiteur de gain dont le gain dépend de l'amplitude du signal d'entrée permet de délivrer au dispositif à seuil un signal Va dont la fréquence est aisément détectable. En outre, l'amplitude crête à crête du signal Va est en quelque sorte comprimée par rapport à ce qui se passerait dans le cas d'une amplification linéaire et le montage décrit ici se prête donc à une utilisation sur piles de faible tension (par exemple 3V) permettant ainsi de réduire considérablement la consommation énergétique.

## Revendications

1. Système pour mesurer la fréquence d'oscillation d'un fluide à l'intérieur d'un oscillateur fluidique comprenant des moyens de détection (1, 2) des oscillations du fluide fournissant un signal représentatif de ces oscillations, les moyens de détection ayant un détecteur de crête (3) comprenant un dispositif à seuil (13) recevant un premier signal correspondant au signal représentatif des oscillations, le dispositif à seuil étant dans un état conducteur lorsque la tension qui lui est appliquée dépasse une valeur de seuil, le dispositif délivrant alors un deuxième signal ayant une chute de tension par rapport au premier signal, des moyens pour recevoir et mémoriser le deuxième signal (14), et des moyens de comparaison (15) comparant la valeur du deuxième signal mémorisé avec la valeur du premier signal et délivrant un signal de sortie caractéristique des valeurs relatives des premier et deuxième signaux, caractérisé en ce que le détecteur de crête comprend en outre un amplificateur (30) qui reçoit et amplifie le signal délivré par les moyens de détection et qui fournit le premier signal au dispositif à seuil, le gain de l'amplificateur étant contrôlé par le deuxième signal reçu du dispositif à seuil.

2. Système selon la revendication 1 où le dispositif à seuil (13) est dans un état conducteur lorsque la tension qui lui est appliquée dépasse une valeur de seuil négative ou positive.

3. Système selon la revendication 2 où le dispositif à seuil (13) comprend deux diodes (20, 21) montées tête-bêche.

4. Système selon l'une des revendications 1 à 3 où les moyens pour mémoriser (14) comprennent un condensateur.

5. Système selon l'une des revendications 1 à 4 où l'amplificateur (30) est un amplificateur différentiel, l'une des deux entrées de l'amplificateur recevant le signal délivré par les moyens de détection et l'autre entrée recevant un signal dépendant du deuxième signal mémorisé et de la sortie de l'amplificateur, la sortie de l'amplificateur fournissant le premier signal et étant relié au dispositif à seuil.

6. Système selon l'une des revendications 1 à 5, dans lequel un adaptateur d'impédance de gain unitaire (33) est disposé entre l'amplificateur (30) et les moyens pour mémoriser le deuxième signal (14).

7. Système selon la revendication 6 où l'adaptateur d'impédance de gain unitaire (33) est un circuit suiveur.

8. Système selon l'une des revendications 1 à 7, dans lequel les moyens de comparaison (15) comprennent un amplificateur qui reçoit le premier et deuxième signaux à deux de ses entrées pour les comparer.

9. Débitmètre comprenant un oscillateur fluidique et un système pour mesurer la fréquence d'oscillation du fluide à l'intérieur de l'oscillateur selon l'une des revendications 1 à 8.

## Patentansprüche

1. System zur Messung der Schwingungsfrequenz eines Fluids im Inneren eines fluidischen Oszillators, mit Mitteln (1, 2) zum Erfassen der Schwingungen des Fluids, die ein für diese Schwingungen typisches Signal liefern, wobei diese Erfassungsmittel einen Maximumdetektor (3) mit einer Schwellenwertvorrichtung (13) haben, die ein erstes Signal empfängt, das dem für die Schwingungen typischen Signal enstpricht, wobei die Schwellenwertvorrichtung einen leitfähigen Zustand hat, wenn die an sie angelegte Spannung einen bestimmten Schwellenwert übersteigt, und dann ein zweites Signal liefert, das gegenüber dem ersten Signal einen Spannungsabfall hat, Mitteln, um das zweite Signal (14) zu empfangen und zu speichern, und Vergleichsmitteln (15), die den Wert des zweiten gespeicherten Signals mit dem ersten Signal vergleichen und ein Ausgangssignal liefern, das für Werte bezüglich des ersten und des zweiten Signals typisch ist, dadurch gekennzeichnet, daß der Maximumdetektor zusätzlich einen Verstärker (30) enthält, der das von den Erfassungsmitteln abgegebene Signal empfängt und verstärkt, und der der Schwellenwertvorrichtung das erste Signal liefert, wobei die Verstärkung des Verstärkers durch das zweite, von der Schwellenwertvorrichtung empfangene Signal gesteuert wird.

2. System nach Anspruch 1, bei dem sich die Schwellenwertvorrichtung (13) in einem leitfähigen Zustand befindet, wenn ihr eine Spannung zugeführt wird, die einen negativen oder positiven Schwellenwert übersteigt.

3. System nach Anspruch 2, bei dem die Schwellenwertvorrichtung (13) zwei Dioden enthält, die antiparallel geschaltet sind.

4. System nach einem der Ansprüche 1-3, bei dem die Speichermittel (14) einen Kondensator enthalten.

5. System nach einem der Ansprüche 1-4, bei dem der Verstärker (30) ein Differenzverstärker ist, bei dem einer der beiden Eingänge das von den Erfassungsmitteln gelieferte Signal empfängt und der andere Eingang ein vom zweiten gespeicherten Signal und vom Verstärkerausgangssignal abhängiges Signal empfängt, wobei der Verstärkerausgang das erste Signal liefert und an die Schwellenwertvorrichung angeschlossen ist.

6. System nach einem der Ansprüche 1-5, bei dem ein Impedanztransformator (33) mit der Verstärkung eins zwischen den Verstärker (30) und die Speichermittel für das zweite Signal (14) geschaltet ist.

7. System nach Anspruch 6, bei dem der Impedanztransformator (33) mit der Verstärkung eins eine Folgeschaltung ist.

8. System nach einem der Ansprüche 1-7, bei dem die Vergleichsmittel (15) einen Verstärker umfassen, der an seinen beiden Eingängen das erste und das zweite Signal empfängt, um sie zu vergleichen.

9. Durchflußmesser mit einem fluidischen Oszillator und einem System zum Messen der Schwingungsfrequenz des Fluids im Inneren des Oszillators nach einem der Ansprüche 1-8.

## Claims

1. A system for measuring the frequency of oscillation of a fluid within a fluidic oscillator comprising detector means (1, 2) for detecting fluid oscillations, providing a signal representing the oscillations, the detector means having a peak detector (3) comprising a threshold device (13) receiving a first signal corresponding to the signal representing the oscillations, the threshold device being in a conductive state when the voltage applied thereto exceeds a threshold value, the device then providing a second signal with a drop in potential relative to the first signal, means (14) for receiving and storing the second signal, and comparison means (15) comparing the value of the second, stored signal with the value of the first signal and providing an output signal characteristic of the relative values of the first and second signals, characterized in that the peak detector further comprises an amplifier (30) which receives and amplifies the signal provided by the detector means and which provides the first signal to the threshold device, the gain of the amplifier being controlled by the second signal received from the threshold device.

2. A system according to claim 1, wherein the threshold device (13) is in a conductive state when the voltage which is applied thereto exceeds a negative or a positive threshold value.

3. A system according to claim 2, wherein the threshold device (13) comprises two diodes (20, 21) connected back to back.

4. A system according to any one of claims 1 to 3, wherein the storing means (14) comprise a capacitor.

5. A system according to any one of claims 1 to 4, wherein the amplifier (30) is a differential amplifier, one of the two inputs of the amplifier receiving the signal provided by the detector means and the other input receiving a signal dependent on the second, stored signal and on the output of the amplifier, the output of the amplifier providing the first signal and being connected to the threshold device.

6. A system according to any one of claims 1 to 5, wherein an impedance matching device (33) with unity gain is located between the amplifier (30) and the means (14) for storing the second signal.

7. A system according to claim 6, wherein the impedance matching device (33) with unity gain is a tracking circuit.

8. A system according to any one of claims 1 to 7, wherein the comparison means (15) comprise an amplifier which receives the first and second signals at two of its inputs, in order to compare them.

9. A flowmeter comprising a fluidic oscillator and a system according to any one of claims 1 to 8 for measuring the frequency of oscillation of the fluid within the oscillator.

## FIG.1

## FIG.2

Ve

30

+

−

Va

R

31

16

17

13

20

21

15

r

32

33

+

−

Vc

14

## FIG.3

SIGNAL DE
SORTIE

SIGNAL
D'ENTREE

40

41

40

41

## FIG.4

## FIG.5

## FIG.6

**FIG.7**